# EUROPEAN PATENT SPECIFICATION

(11) **EP 2 541 294 B1**
(45) Date of publication and mention of the grant of the patent: **20.01.2016**
(21) Application number: 11171907.6
(22) Date of filing: 29.06.2011
(51) Int. Cl.: G02B 6/38, G02B 6/44

(54) **Fibre connector adapter holder with latching means**
Fasersteckeradapterhalter mit Klemmvorrichtung
Support d'adapteur pour des connecteurs de fibre optique avec dispositif de borne

(43) Date of publication of application: 02.01.2013
(60) Divisional application: 15195832.9
(73) Proprietor: CCS Technology, Inc., Wilmington, DE 19803 (US)
(72) Inventor: Fabrykowski, Grzegorz, 95-010 Strykow (PL); Müller, Michael, 58706 Menden (DE); Ciechomski, Tomasz, 99-400 Lowicz (PL)
(74) Representative: Sturm, Christoph

(56) References cited:
- WO-A1-97/29395
- FR-A5- 2 145 901
- JP-U- 61 148 006
- US-A- 5 078 467
- US-A- 5 214 735
- US-A- 5 581 900
- US-A1- 2003 063 888

## Description

The present patent application relates to a handling device for connections between data transmission cables.

EP 0 740 803 B1 discloses a handling device for connections between data transmission cables, especially for fiber optic connections between fiber optic cables, according to the preamble of claim 1. The handling device disclosed in EP 0 740 803 B1 comprises a fixture and a plurality of adapter modules mounted side by side in a first direction on the fixture. Each adapter module of the prior art handling device is individually removable from the fixture and individually mountable on the fixture. Further on, each adapter module of the prior art handling device comprises a plurality of adapters arranged side by side in a second direction, whereby each adapter is configured to hold connectors and connect data transmission cables at a rear side and a front side of the respective adapter module.

According to EP 0 740 803 B1, each adapter module is movable with respect to the fixture along a line of travel. Releasable locking means can releasable lock each of the adapter modules in any one of a plurality of fixed positions along the line of travel. For removing the adapter modules from the fixture a defined free space above the fixture is needed, namely a space having the dimension at least of the adapter modules. This limits the ability to increase the density of adapters which can be arranged in a defined space.

Other priorb art is known from JP 61-148006 U and from US 5 078 467 A.

Against this background, the problem to be solved is to provide a novel handling device for connections between data transmission cables.

This problem is solved by a handling device for connections between data transmission cables according to claim 1.

The novel handling device requires a reduced free space above the fixture for removing the adapter modules, namely for providing manual finger access to the adapter modules. The adapter modules can be removed from the fixture to the side. It is possible to increase the density of adapters which can be arranged in a defined space. The holding legs being pivotably connected in a middle portion are pivotable like legs of a clothespin.

Preferred embodiments of the handling device are given in the dependent claims and the description below. Exemplary embodiments will be explained in more detail with reference to the drawing, in which:
- Figure 1: shows a perspective view of a novel handling device for connections between data transmission cables according to a first embodiment;
- Figure 2: shows an adapter module of Figure 1;
- Figure 3: shows a perspective view of a novel handling device for connections between data transmission cables according to a second embodiment;
- Figure 4: shows an adapter module of figure 3;
- Figures 5 and 6: show a perspective view of a the handling device of Figure 3 with stacked adapter modules;
- Figure 7: shows stacked adapter modules of Figures 5 and 6.

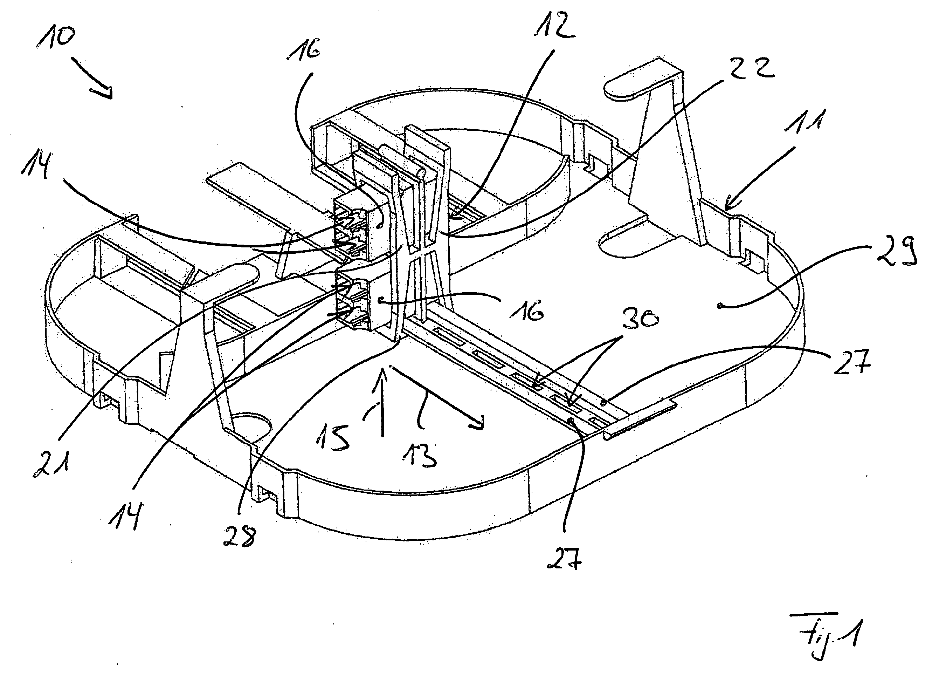

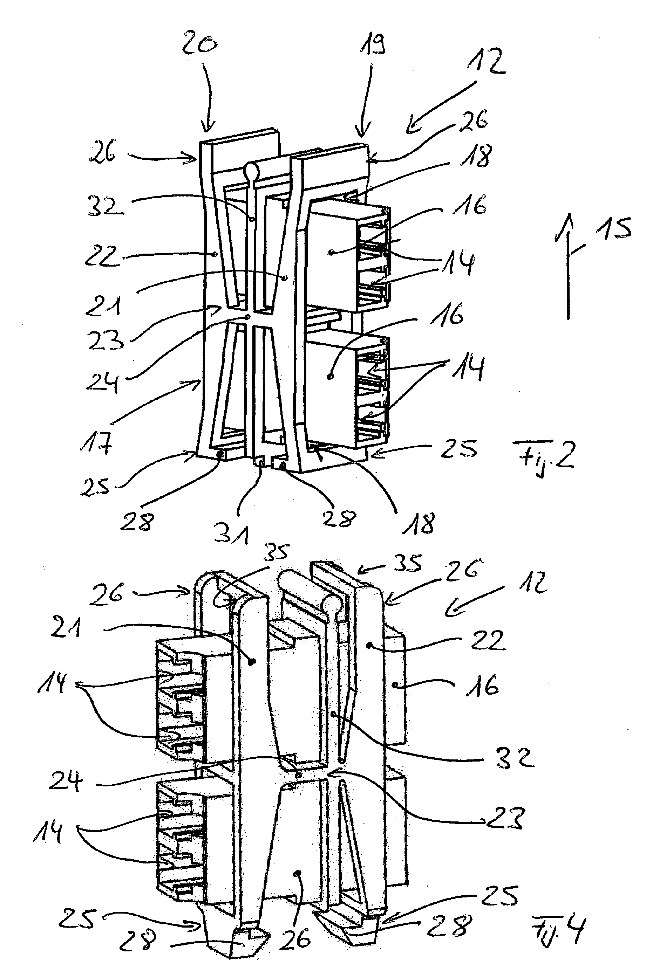

Figure 1 shows a perspective view of a novel handling device 10 for connections between data transmission cables, especially for fiber optic connections between fiber optic cables, according to a first embodiment. The handling device 10 according to Figure 1 comprises a fixture 11 and a plurality of adapter modules 12. The fixture 11 may comprise one adapter module 12. Figure 1 shows the fixture 11 together with one adapter module 12. Figure 2 shows one adapter module 12.

In case of a plurality of adapter modules 12, the plurality of adapter modules 12 are mounted side by side in a first direction 13 on the fixture 11. Each adapter module 12 is individually removable from the fixture 11 and individually mountable on the fixture 11.

Each adapter module 12 comprises a plurality of adapters 14 arranged side by side in a second direction 15. The adapter module 12 shown in Figure 1 comprises four adapters 14, whereby each two adapters 12 have a common adapter housing 16.

It should be noted that each adapter 14 can also comprise an individual adapter housing. The number of adapters 14 assigned to an adapter module 12 can be different. Further on, each adapter module 12 can comprise a single adapter.

The adapters 14 having a common adapter housing 16 or having individual adapter housings are held by a basic body 17 of the respective adapter module 12. The basic body 17 provides openings 18 (see Figure 2) for receiving the adapters 14. The adapters 14 are configured to hold connectors and connect data transmission cables at a rear side 19 and a front side 20 of the respective adapter module 12.

The basic body 17 of each adapter module 12 comprises holding legs 21, 22 being pivotably and flexibly connected in a middle portion 23 of the same by a connection element 24 being fixedly attached to both holding legs 21, 22. A first holding leg 21 is assigned to the rear side 19 of the respective adapter module 12 and a second holding leg 22 is assigned to the front side 20 of the respective adapter module 12.

The holding legs 21, 22 define together the openings 18 for receiving and holding the adapters 14. The holding legs 21, 22 being pivotably connected in the middle portion 23 by the connection element 24 can be pivoted like legs of a clothespin.

In a first, manually un-actuated position (see Figures 1 and 2) of the holding legs 20, 21 the same run in general parallel to each other so that the respective adapter module 12 can be held on the fixture 11 in the first position.

In a second, manually actuated position (not shown) of the holding legs 20, 21 the same are pivoted with respect to each other so that the respective adapter module 12 can be mounted on the fixture 11 or removed from the fixture 11 in the second position.

In the first, manually un-actuated position of the holding legs 20, 21 the distance between first ends 25 of the holding legs 21, 22 corresponds to the distance between second ends 26 of the same. In the second, manually actuated position of the holding legs 20, 21 the distance between first ends 25 of the holding legs 21, 22 is increased and the distance between second ends 26 of the holding legs 21, 22 is decreased. Accordingly, in the first, manually un-actuated position of the holding legs 21, 22 the distance between the first ends 25 of the holding legs 21, 22 is smaller than in the second, manually actuated position of the holding legs 21, 22. In the first, manually un-actuated position of the holding legs 21, 22 the distance between the second ends 26 of the holding legs 21, 22 is larger than in the second, manually actuated position of the holding legs 21, 22.

The first ends 25 of the holding legs 21, 22 of the respective adapter module 12 comprise fixing hooks 28 acting together with holding means of the fixture 11 when the respective adapter module 12 is held on the fixture 11 in the first position of the holding legs 21, 22. In the first position of the holding legs 21, 22 of the respective adapter module 12 the fixing hooks 28 are engaging with the holding means of the fixture 11 when the respective adapter module 12 is held on the fixture 11 in the first position of the holding legs 21, 22.

In the embodiment of Figures 1 and 2, the holding means of the fixture 11 are provided by mounting rails 27. The mounting rails 27 run in the first direction 13 and are fixed to a mounting surface 29 of the fixture 11.

In the embodiment of Figures 1 and 2, openings 30 are positioned between the mounting rails 27 of the fixture 11. The openings 30 are positioned side by side in the first direction 13. The openings 30 define the relative position of adapter modules 12 on the fixture 11 in such a way that a protrusion 31 of an inner leg 32 of the basic body 17 of the respective adapter module 12 being positioned between the holding legs 21, 22 protrudes into one of the openings 30 when the respective adapter module 12 is held on the fixture 11 in the first position of the holding legs 21, 22.

When the protrusion 31 of the inner leg 32 of the basic body 17 of the respective adapter module 12 protrudes into one of the openings 30 of the fixture and when the holding legs 20, 21 of the respective adapter module 12 adopt their first, manually un-actuated position, it is not possible to remove the respective adapter module 12 from the fixture 11 because the fixing hooks 28 are engaging with the mounting rails 27 of the fixture 11.

In order to remove the respective adapter module 12 from the fixture it is necessary to manually actuate the holding legs 20, 21 by pivoting the same into the second, manually actuated position. This can be done by manually pressing the second ends 26 of the holding legs 20, 21 together thereby increasing the distance between the first ends 25 of holding legs 20, 21 and thereby between the fixing hooks 28 so that the same disengage from the mounting rails 27 of the fixture 11. The second ends 26 of the holding legs 21, 22 of the respective adapter module 21 provide gripping elements for manually actuating the holding legs 21, 22 by manually pressing the gripping elements together.

When the gripping elements or the second ends 26 of the holding legs 21, 22 are not actuated, the holding legs 21, 22 automatically return to their first, manually un-actuated position due to the flexibility or elasticity of the material of the connection element 24.

In the embodiment of Figures 1 and 2, the adapter modules 12 are symmetrically in such a way that the inner leg 32 of the basic body 17 is positioned in the middle between the holding legs 21, 22 namely in the middle of the connecting element 24.

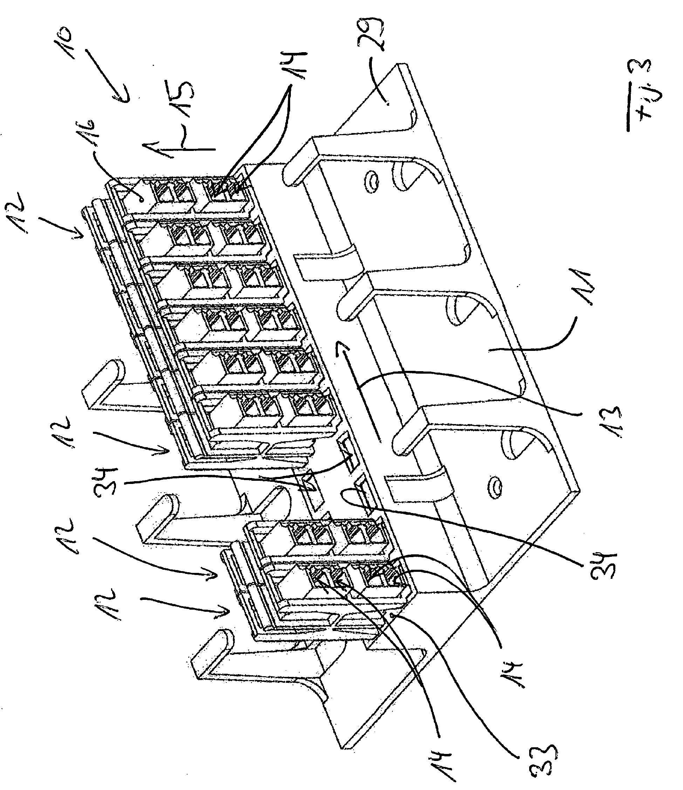

Figure 3 and 4 show an embodiment in which the adapter modules 12 are asymmetrically in such a way that the inner leg 32 of the basic body 17 is not positioned in the middle of the connecting element 24 but is immediately adjacent to one of the holding legs, namely according to Figure 4 to the holding leg 22.

When manually actuating the holding legs 20, 21 of the adapter module 12 of Figures 3 and 4 by pressing the second ends 26 of the holding legs 20, 21 together, only one holding leg is pivoted, namely the holding leg 21 having the larger distance from the inner leg 32. In the embodiment of Figures 1 and 2, both holding legs 21 and 22 are pivoted when pressing the second ends 26 of the holding legs 20, 21 together.

Figures 3 and 4 illustrate an embodiment which facilitates the mounting of the adapter modules 12 on the fixture 11. In the embodiment of Figures 1 and 2, the protrusion 31 of the inner leg 32 of the basic body 17 of the respective adapter module 12 is inserted into one of the openings 30 of the fixture 11. Afterwards, the fixing hooks 28 engage with the mounting rails 28 when the holding legs 21, 22 automatically return to their first, manually un-actuated position.

In the embodiment of Figures 3 and 4, it is possible to directly insert one fixing hook 28 of one holding leg, namely the fixing hook 28 of the holding leg 22 having the smaller distance from the inner leg 32, into a mounting opening 34 of the fixture 11. Afterwards, the other mounting leg 21 having the larger distance from the inner leg 32 is pivoted by pressing the second ends 26 of the holding legs 21 and 22 of the basic body 17 of the respective adapter module 12 together thereby increasing the distance of the fixing hooks 28 assigned to the first ends 25 of the holding legs 21, 22 in order to insert also the other fixing hook 28 of the other holding leg 21 into a mounting opening 34 of the fixture 11.

The mounting openings 34 of the fixture 11 of the embodiment of Figures 3 and 4 are provided by a raised portion 33 of the mounting surface 29 of the fixture 11, whereby free space is provided below the raised portion 33 of the mounting surface 29.

The mounting openings 34 serve to fix the adapter modules 12 on the fixture 11 and therefore provide the holding means for the adapter modules 12.

Further on, the mounting openings 34 define the relative position of adapter modules 12 on the fixture 11. The mounting openings 34 are positioned side by side along parallel lines running in the first direction 13.

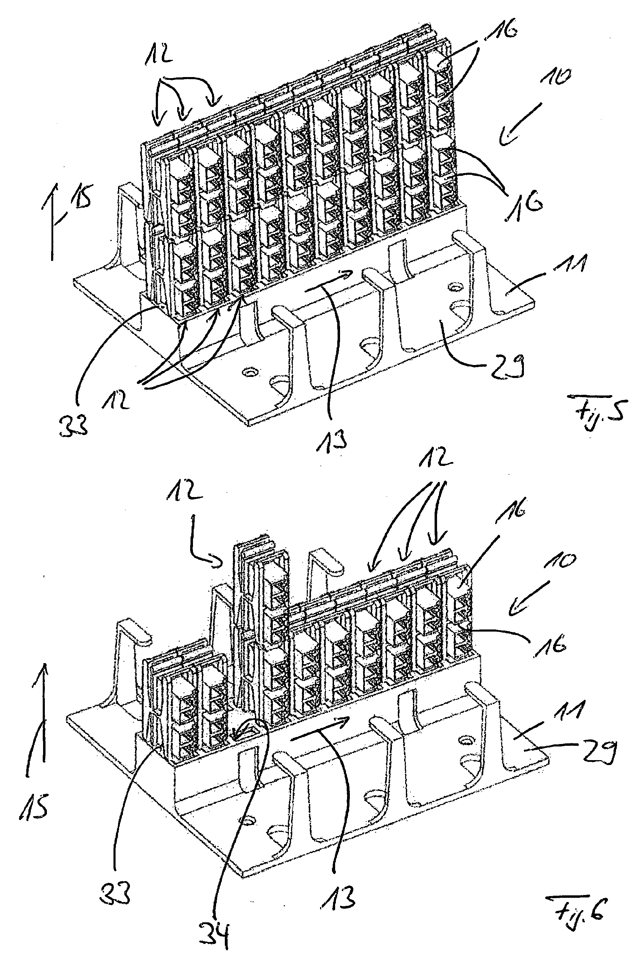

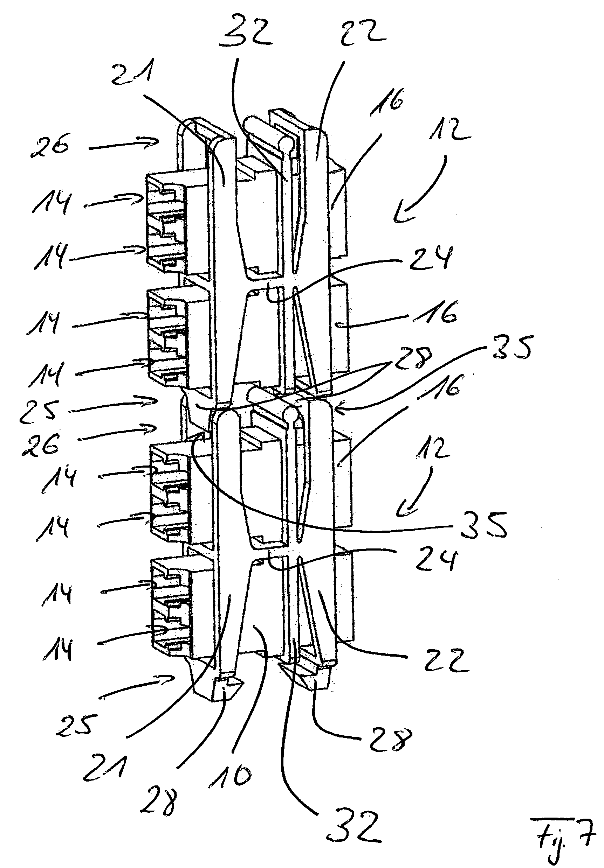

According to Figures 5, 6 and 7, it is possible that at least two adapter modules 12 are stacked in such a way that the basic body 17 of a first, lower adapter module 12 is mounted on the fixture 11 and that the basic body 17 of a second, upper adapter module 12 is mounted on the basic body 17 of a first adapter module 12 and through the first adapter module 12 on the fixture 11. As can be best seen in Figure 7, the fixing hooks 28 assigned to the first ends 25 of the holding legs 21, 22 of the basic body 17 of the second, upper adapter module 12 engage with the second ends 26 of the holding legs 21, 22 of the basic body 17 of the first, lower adapter module 12.

When stacking the adapter modules 12, first the respective lower adapter module 12 is mounted on the fixture 11 by inserting the fixing hooks 28 assigned to the first ends 25 of the holding legs 21, 22 of the basic body 17 of the lower adapter module 12 into the mounting opening 34 provided by the fixture 11. Afterwards, the respective upper adapter module 12 is mounted on the respective lower adapter module 12 by inserting the fixing hooks 28 assigned to the first ends 25 of the holding legs 21, 22 of the basic body 17 of the upper adapter module 12 into openings 35 provided in the region of the second ends 26 of the holding legs 21, 22 of the basic body 17 of the lower adapter module 12. In this way it is possible to stack more than two adapter modules 12 above each other.

The stacking of the adapter modules 12 allows to further increase the density of adapters 14 which can be arranged in a defined space.

### List of reference numerals

- 10: handling device
- 11: fixture
- 12: adapter module
- 13: first direction
- 14: adapter
- 15: second direction
- 16: adapter housing
- 17: basic body
- 18: opening
- 19: rear side
- 20: front side
- 21: holding leg
- 22: holding leg
- 23: middle portion
- 24: connection element
- 25: first end
- 26: second end
- 27: mounting rail
- 28: fixing hook
- 29: mounting surface
- 30: opening
- 31: protrusion
- 32: inner leg
- 33: raised prtion
- 34: mounting opening
- 35: opening

## Claims

1. A handling device (10) for connections between data transmission cables, especially for fiber optic connections between fiber optic cables, comprising:
a fixture (11);
a plurality of adapter modules (12) mountable side by side in a first direction on the fixture (11), whereby the or each adapter module (12) is individually removable from the fixture (11) and individually mountable on the fixture (11), whereby the or each adapter module (12) comprises a basic body (17) for holding at least one adapter (14), and whereby the or each adapter (14) is configured to hold connectors and connect data transmission cables at a rear side and a front side of the respective adapter module (12);
wherein
the basic body (17) of the or each adapter module (12) has holding legs (21, 22),
each holding leg (21, 22) of the respective adapter module (12) has a first end (25) and a second end (26),
the holding leg (21, 22) of the respective adapter module (12) are pivotably and flexibly connected in a middle portion (23) of the same,
the second ends (26) of the holding legs (21, 22) of the respective adapter module (12) provide gripping elements for manually actuating and thereby pivoting the same, whereby in a first, manually un-actuated position of the holding legs (21, 22) the same run in general parallel to each other so that the respective adapter module (12) can be held on the fixture (11) in the first position, and whereby in a second, manually actuated position of the holding legs (21, 22) the same are pivoted with respect to each other so that the respective adapter module (12) can be mounted on the fixture (11) or removed from the fixture (11) in the second position the handling device being **characterised in that** the holding legs (21, 22) of the respective adapter module (12) define openings (18) for receiving and holding the or each adapter (14), wherein a first holding leg (21) is assigned to a rear side (19) of the respective adapter module (12) and second holding leg (22) is assigned to a front side (20) of the respective adapter module (12).

2. The handling device as claimed in claim 1, **characterised in that** the first ends (25) of the holding legs (21, 22) of the respective adapter module (12) comprise fixing hooks (28) acting together with holding means of the fixture (11) when the respective adapter module (12) is hold on the fixture (11) in the first position of the holding legs (21, 22).

3. The handling device as claimed in claim 2, **characterised in that** in the first, manually un-actuated position the distance between the first ends (25) of the holding legs (21, 22) is smaller than in the second, manually actuated position.

4. The handling device as claimed in claim 1, **characterised in that** in the first, manually un-actuated position the distance between the second ends (26) of the holding legs (21, 22) is larger than in the second, manually actuated position.

## Patentansprüche

1. Handhabungsvorrichtung (10) für Verbindungen zwischen Datenübertragungskabeln, insbesondere für faseroptische Verbindungen zwischen faseroptischen Kabeln, umfassend:
eine Halterung (11);
eine Vielzahl von Adaptermodulen (12), welche nebeneinander in einer ersten Richtung auf der Halterung (11) montierbar sind, wobei das oder jedes Adaptermodul (12) individuell von der Halterung (11) abnehmbar und individuell auf der Halterung (11) montierbar ist, wobei das oder jedes Adaptermodul (12) einen Grundkörper (17) zum Festhalten mindestens eines Adapters (14) aufweist, und wobei der oder jeder Adapter (14) dafür ausgelegt ist, Stecker festzuhalten und Datenübertragungskabel an einer hinteren Seite und einer vorderen Seite des jeweiligen Adaptermoduls (12) anzuschließen;
wobei
der Grundkörper (17) des oder jedes Adaptermoduls (12) Halteschenkel (21, 22) besitzt,
jeder Halteschenkel (21, 22) des jeweiligen Adaptermoduls (12) ein erstes Ende (25) und ein zweites Ende (26) besitzt,
die Halteschenkel (21, 22) des jeweiligen Adaptermoduls (12) schwenkbar und biegsam in einem Mittelabschnitt (23) derselben verbunden sind,
die zweiten Enden (26) der Halteschenkel (21, 22) des jeweiligen Adaptermoduls (12) Greifelemente zum manuellen Betätigen und dadurch Schwenken derselben bereitstellen, wobei in einer ersten, manuell unbetätigten Position der Halteschenkel (21, 22) dieselben im allgemeinen parallel zu einander verlaufen, so dass das jeweilige Adaptermodul (12) auf der Halterung (11) in der ersten Position festgehalten werden kann, und wobei in einer zweiten, manuell betätigten Position der Halteschenkel (21, 22) dieselben in Bezug zueinander geschwenkt sind, so dass das jeweilige Adaptermodul (12) auf der Halterung (11) in der zweiten Position montiert oder von der Halterung (11) entfernt werden kann, wobei die Handhabungsvorrichtung **dadurch gekennzeichnet ist, dass** die Halteschenkel (21, 22) des jeweiligen Adaptermoduls (12) Öffnungen (18) zum Aufnehmen und Festhalten des oder der Adapter (14) definieren, wobei ein erster Halteschenkel (21) einer hinteren Seite (19) des jeweiligen Adaptermoduls (12) zugeordnet ist und ein zweiter Halteschenkel (22) einer vorderen Seite (20) des jeweiligen Adaptermoduls (12) zugeordnet ist.

2. Handhabungsvorrichtung nach Anspruch 1, **dadurch gekennzeichnet, dass** die ersten Enden (25) der Halteschenkel (21, 22) des jeweiligen Adaptermoduls (12) Befestigungshaken (28) aufweisen, welche mit Haltemitteln der Halterung (11) zusammenwirken, wenn das jeweilige Adaptermodul (12) an der Halterung (11) in der ersten Position der Halteschenkel (21, 22) festgehalten wird.

3. Handhabungsvorrichtung nach Anspruch 2, **dadurch gekennzeichnet, dass** in der ersten, manuell unbetätigten Position der Abstand zwischen den ersten Enden (25) der Halteschenkel (21, 22) kleiner als in der zweiten, manuell betätigten Position ist.

4. Handhabungsvorrichtung nach Anspruch 1, **dadurch gekennzeichnet, dass** in der ersten, manuell unbetätigten Position der Abstand zwischen den zweiten Enden (26) der Halteschenkel (21, 22) größer als in der zweiten, manuell betätigten Position ist.

## Revendications

1. Dispositif de manipulation (10) pour les connexions entre des câbles de transmission de données, particulièrement pour des connexions de fibres optiques entre des câbles à fibres optiques, comprenant :
un dispositif de fixation (11) ;
une pluralité de modules adaptateurs (12) pouvant être montés côte à côte dans une première direction sur le dispositif de fixation (11), comme quoi le ou chaque module adaptateur (12) peut être enlevé individuellement du dispositif de fixation (11) et être monté individuellement sur le dispositif de fixation (11), comme quoi le ou chaque module adaptateur (12) comporte un corps de base (17) pour maintenir au moins un adaptateur (14) et comme quoi le ou chaque adaptateur (14) est configuré de façon à maintenir des connecteurs et à connecter des câbles de transmission de données sur un côté arrière et sur un côté avant du module adaptateur respectif (12) ;
dans lequel
le corps de base (17) et le ou chaque module adaptateur (12) a des pattes de maintien (21, 22),
chaque patte de maintien (21, 22) du module adaptateur respectif (12) a une première extrémité (25) et une deuxième extrémité (26),
la patte de maintien (21, 22) du module adaptateur respectif (12) est rattachée de manière pivotable et flexible dans une partie médiale (23) de celui-ci,
les deuxièmes extrémités (26) des pattes de maintien (21, 22) du module adaptateur respectif (12) fournissent des éléments de saisie pour actionner manuellement et faire pivoter ainsi celles-ci, comme quoi, dans une première position manuellement non actionnée des pattes de maintien (21, 22), celles-ci s'étendent en général parallèlement l'une à l'autre de façon à ce que le module adaptateur respectif (12) puisse être maintenu sur le dispositif de fixation (11) dans la première position, et comme quoi, dans une deuxième position manuellement actionnée des pattes de maintien (21, 22), celles-ci sont pivotées l'une par rapport l'autre de manière à ce que le module adaptateur respectif (12) puisse être monté sur le dispositif de fixation (11) ou enlevé du dispositif de fixation (11) dans cette deuxième position, le dispositif de manipulation étant **caractérisé en ce que** les pattes de maintien (21, 22) du module adaptateur respectif (12) définissent des ouvertures (18) pour recevoir et maintenir le ou chaque adaptateur (14), une première patte de maintien (21) étant attribuée à un côté arrière (19) du module adaptateur respectif (12) et la deuxième patte de maintien (22) étant attribuée à un côté avant (20) du module adaptateur respectif (12).

2. Dispositif de manipulation selon la revendication 1, **caractérisé en ce que** les premières extrémités (25) des pattes de maintien (21, 22) du module adaptateur respectif (12) comportent des crochets de fixation (28) agissant ensemble avec les moyens de maintien du dispositif de fixation (11) lorsque le module adaptateur respectif (12) est maintenu sur le dispositif de fixation (11) dans la première position des pattes de maintien (21, 22).

3. Dispositif de manipulation selon la revendication 2, **caractérisé en ce que**, dans la première position manuellement non actionnée, la distance entre les premières extrémités (25) des pattes de maintien (21, 22) est plus petite que dans la deuxième position manuellement actionnée.

4. Dispositif de manipulation selon la revendication 1, **caractérisé en ce que**, dans la première position manuellement non actionnée, la distance entre les deuxièmes extrémités (26) des pattes de maintien (21, 22) est plus grande que dans la deuxième position manuellement actionnée.
